Europäisches Patentamt

(19) European Patent Office

Office européen des brevets

(11) Publication number: **0 068 729**
**A1**

(12) **EUROPEAN PATENT APPLICATION**

(21) Application number: **82303140.6**

(22) Date of filing: **16.06.82**

(51) Int. Cl.³: **H 02 K 5/08**

(30) Priority: **19.06.81 US 275181**

(43) Date of publication of application: **05.01.83**
**Bulletin 83/1**

(84) Designated Contracting States: **DE FR GB**

(71) Applicant: **GENERAL SIGNAL CORPORATION, High Ridge Park, Stamford Connecticut 06904 (US)**

(72) Inventor: **De Sisto, Richard Edward, 301 W. Ridge Street, Carlisle Pennsylvania 17013 (US)**
Inventor: **Hickman, Dale A., 626 North Bedford Street, Carlisle Pennsylvania, 17013 (US)**
Inventor: **Snider, Larry E., 5 Harrison Drive, Trappe Maryland 21673 (US)**

(74) Representative: **Milhench, Howard Leslie et al, A.A. Thornton & Co. Northumberland House 303/306 High Holborn, London, WC1V 7LE (GB)**

(54) **Motor housing.**

(57) A new and economical housing for a fractional horsepower motor, which is constructed of two mating parts for (100, 200) supporting and mounting the various components of the motor with their required relationships. The bearing supports (107, 108, 207, 208) are accurately positional with respect to the stator supports to provide economical assembly with little, if any, adjustment. The housing includes brush and spring boxes. Openings (102, 202) are provided for effective passage of cooling air. Various motor mounting means are provided.

- 1 -

Fractional Horsepower Electric Motor

Background of the Invention

Fractional horsepower motors are used in a wide variety of devices that one encounters daily. These devices include: blenders, food mixers, small power hand tools, vacuum cleaners, ventillating fans, heaters, and a wide vareity of other products. Although these motors are so ubiquitous that an average home may have ten or more devices using such motors, they are highly sophisticated and precision-built devices which are produced in large numbers by many manufacturers. There is much competition for market share in the production of these motors, and each manufacturer seeks to design a motor which he can make a little bit better and a little bit cheaper, thereby improving his market position and profit potential. Any design which can minimize or reduce cost by even a fraction of a cent per motor is considered of value in this sophisticated and crowded art.

- 2 -

0068729

## Description of Prior Art

Because fractional horsepower motors are used in such large numbers and are sold in a very competitive market, a great deal of engineering time has been devoted to designing these motors with a view towards improving their performance and/or reducing their cost. As a result, there are many patents related to the fractional horsepower motor art and the field is quite crowded. No patent or combination of patents is known to disclose the inventive concepts disclosed herein. However, the following patents disclose at least some features of related interest. Patent 3,955,113 issued May 4, 1976 to Hillyer, et al, discloses a unique brush holder which has some common objectives with the brush holding means of the present application. Patent 4,038,573 issued July 26, 1977 to Hillyer, et al, discloses a stator coil terminating means which is used on the stator of the present application. Patent 4,056,749 issued November 1, 1977 to Carlson, et al, discloses a modular motor assembly and a different technique for the economic assembly of the various components of a fractional horsepower motor. The abovementioned patents are all United States patents which are assigned to General Signal Corporation.

Patent 3,784,856 issued January 8, 1974 to Preston, discloses a specific brush holder assembly and, coincidentally, a portion of a motor housing. Patent 3,924,147 issued December 2, 1975 to Tarnow et al discloses a motor assembly technique employing a printed circuit board. Patent 3,979,615 issued September 7, 1976 to Neff discloses a stator assembly and an alternate means of making connections thereto. Patent 3,984,908 issued October 12, 1976 to Ackley discloses other terminal means for use with a stator. Patent 4,092,556 issued May 30, 1978 to Mabuchi discloses means for air cooling a motor.

## Summary of the Invention

This invention teaches a new and improved fractional horsepower motor which may be economically and advantageously assembled with a minimum number of parts and without a requirement for time consuming and expensive adjustments. The motor may comprise a stator assembly having terminals for making connections similar to those shown in US patents 4,038,573 and 4,056,749. A conventional rotor, commutator, and bearing assembly is also provided. The motor components are housed in a nonconducting, plastic housing which comprises two parts which mate together in a plane including the axis of the rotor. One of the housing members may be conveniently designated as the assembly half and the other as the cover half.

The assembly half includes guides and recesses for locating and supporting the stator, the bearings, the commutator brushes, and other minor parts to be described more fully hereinbelow. Resilient biasing means assembled in the assembly half of the housing bias the stator and bearings towards the cover half when it is placed in position and secured to the assembly half. With the cited elements resiliently biased towards reference points in the cover half, they are accurately positioned with respect to each other so that no further adjustment of the parts is required to produce a functional motor.

The motor housing includes, as an integral part thereof, a brush and spring channel. As the stator and rotor are placed in position in the assembly half of the housing, the contact member, which is plugged into a contact of a terminal board attached to the stator, fits into a slot in the brush channel at the end remote from the commutator and provides the electrical connection between the brush and the stator winding. The brush channel includes means for inhibiting the forward motion of the brush spring, so that it cannot contact the commutator when the brush wears down. Brushes may be simply and expeditiously replaced by removal of the cover half of the housing, replacement of the brushes, and replacement of the cover half of the housing. A variety of means are provided for mounting the motor, and a grounding clip is provided for grounding the stator and armature shaft. The housing has incorporated therein strain relief means for gripping the wires and preventing any tension applied thereto from being transmitted inward of the housing.

A particular feature of the motor assembly is the provision for cooling the motor. Coupled to the armature shaft is a fan which serves to pull cooling air through openings provided in the motor housing at the commutator end. The cooling air is exhausted from the housing at the remote end. The flow of cooling air has been improved by providing an annular opening having a radius a little larger than the locus of the outer limits of the rotating fan blades. The annular opening is preferably configured by the meeting of the frustum of two right circular cones such that the apex angle of the cone associated with the inner frustum is greater than the apex angle of the cone associated with the outward frustum. This configuration has been found to provide an improved flow of cooling air thereby allowing the motor to produce more work. The bearing at the fan end is cooled by having a plurality of holes or scallops through which cooling air is pulled and exhausted through the recited annular opening.

During assembly, speed nuts may be captured in appropriately-positioned recesses to provide for one form of mounting. The grounding clip may also be captured in an appropriate recess, which may also capture a speed nut. Capturing the grounding clip in this manner prevents its accidental loss, and concomitant loss of grounding, if the motor is disassembled.for brush replacement.

In its broadest aspect, therefore, the invention provides a fractional horsepower electric motor comprising a rotor, a stator, and a housing for said rotor and stator characterized in that said housing comprises first and second parts configured to mate with one another so as to define an assembly for housing and supporting said rotor and said stator, said assembly having opposed end walls formed with bearing supports for positioning and locating respective rotor bearings and having openings formed therein for the exit and entrance respectively of cooling air from and to the housing, one of said parts further being formed with locators for cooperation with the stator to accurately position the stator relative to the bearing supports, and one of said parts further including as an integral part thereof means for retaining brushes for electrically contacting a commutator of the motor.

Brief Description of the Drawing

The drawing provides a variety of figures which illustrate an exemplary embodiment of the invention in various views and states of assembly. Elements which may be seen in more than one figure are always identified with the same number.

Figure 1 comprises an isometric view of an assembled motor as seen from the fan end with the cover half of the housing upward;

Figure 2 comprises an isometric view of the motor as seen from the other end and with the cover half of the housing upward;

Figure 3 comprises a view looking towards the interior of the cover half of the housing;

Figure 4 comprises an end view of the cover half of the housing as seen from the fan end;

Figure 5 comprises an end view of the cover half of the housing as seen from the other end;

Figure 6 comprises a cross section of the cover shown in Figure 3 and taken on the line 6-6;

Figure 7 comprises a view of the interior of the assembly half of the housing;

Figures 8A and 8B comprise a simplified view of the rotor and stator assemblies, respectively, which are housed within the motor housing;

Figure 9 comprises a view of the grounding clip;

Figure 10 is the brush contact; and

Figure 11 is the lefthand bearing.


## Description of the Preferred Embodiment

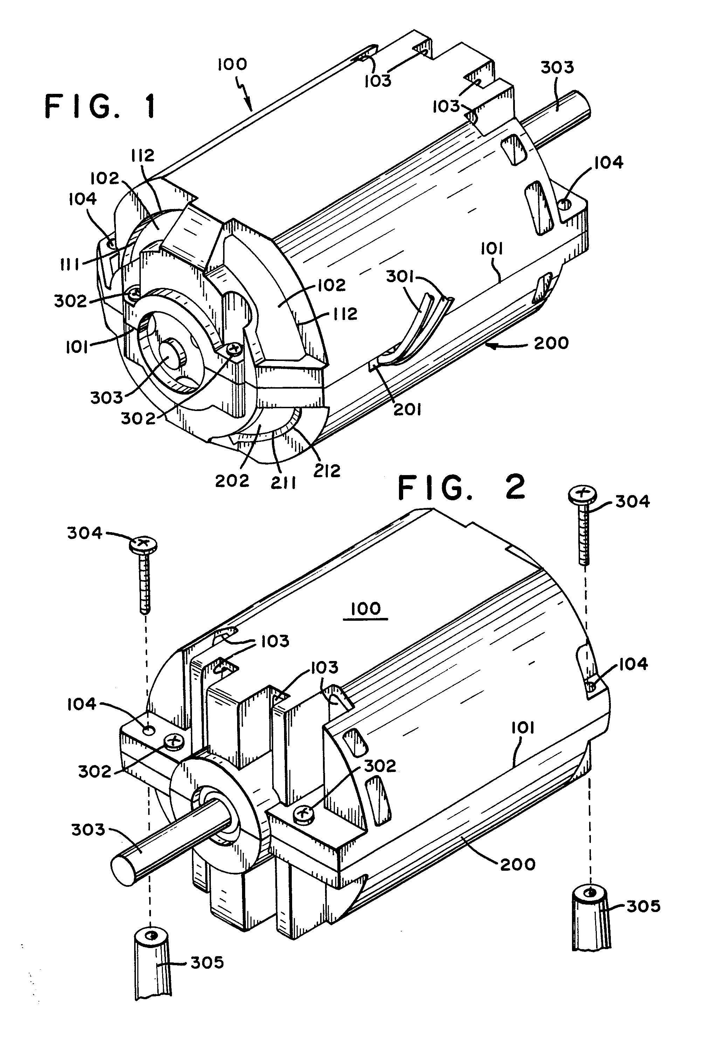

Considering first Figure 1, there will be seen an isometric view of a completed motor assembly as seen from the fan end. The motor housing includes the cover half indicated generally as 100 and the assembly half indicated generally as 200. Wires 301 pass through hole 201 of the assembly portion 200. The cover 100 and assembly portion 200 of the housing are held together by means of screws 302 which pass through a body hole in the cover 100 and tap into the assembly portion 200. If desired, other fastening means could be provided. The shaft 303 may be seen projecting from the right-hand end of the housing and the left-hand end of the shaft 303 may also be seen at the left-hand end of the housing.

The assembly portion of the housing 200 and the cover portion 100 separate at parting line 101.

At the left end of the housing may be seen the orifices 102 and 202 through which cooling air is expelled. In an actual assembly, the fan blades might be visible through the orifice opening 102. However, illustration of the fan blades in Figure 1 would add unnecessary detail and obscure details relating to the housing.

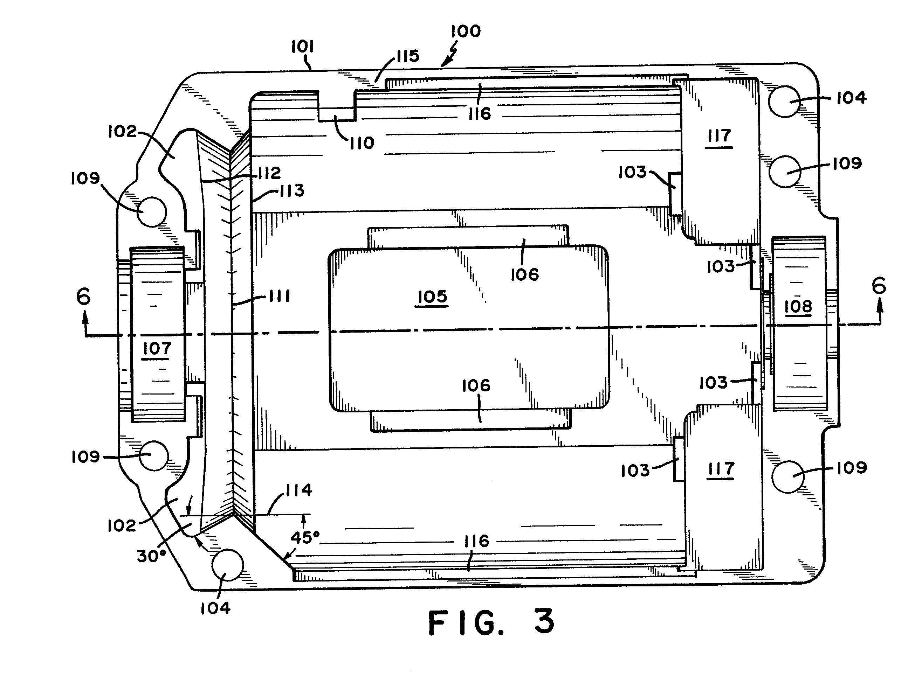

Considering now Figure 2, there will be seen another isometric view of the motor housing as seen from the end remote from the cooling fan. Entrance holes 103 are provided for the entrance of cooling air. Additional assembly screws 302 may be seen.

One technique for mounting the motor is illustrated using mounting posts 305 which may be a part of a frame assembly on which the motor is to be mounted. The screws 304 pass through a hole 104 in the cover 100 and through a mating hole 204 in the assembly portion 200 and are secured in the posts 305.

Considering now more specifically Figure 3, there will be seen a view looking into the interior of the cover assembly 100.

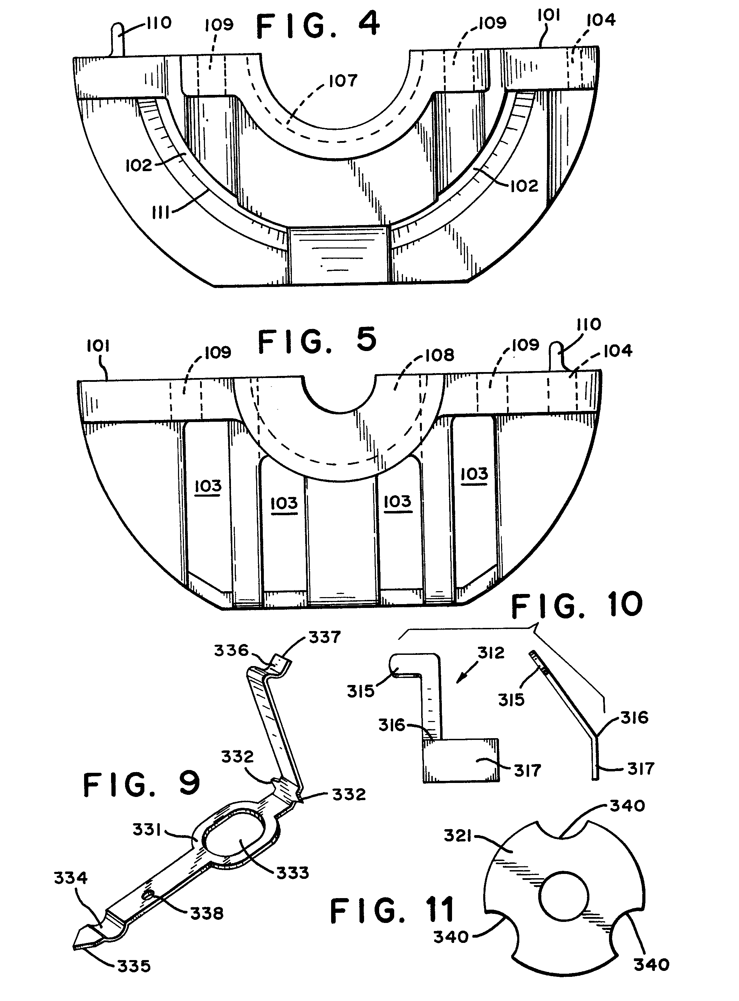

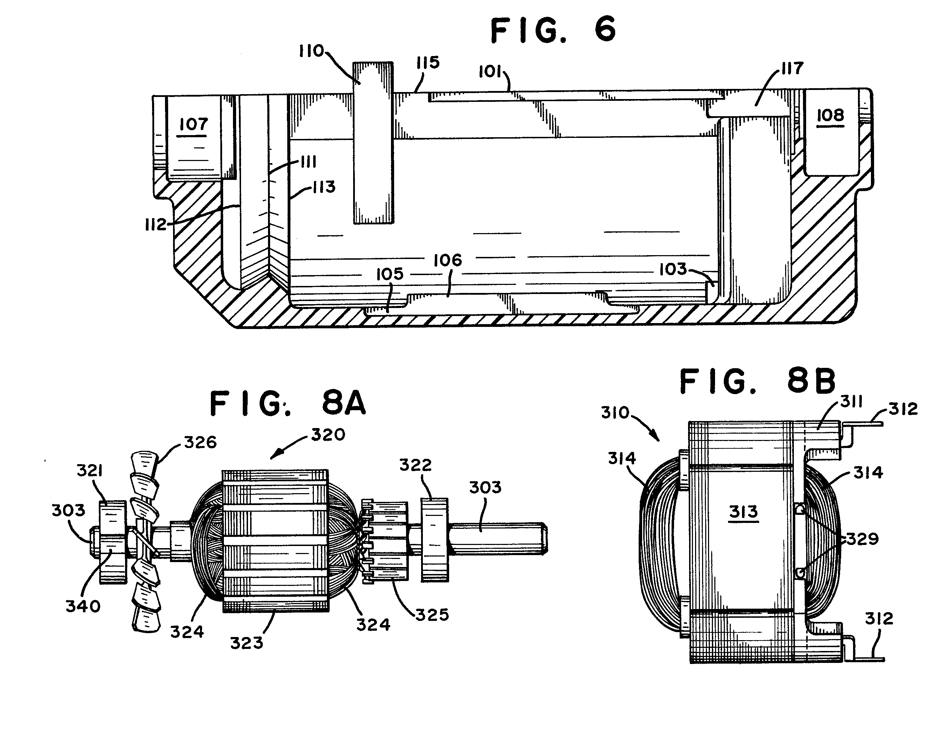

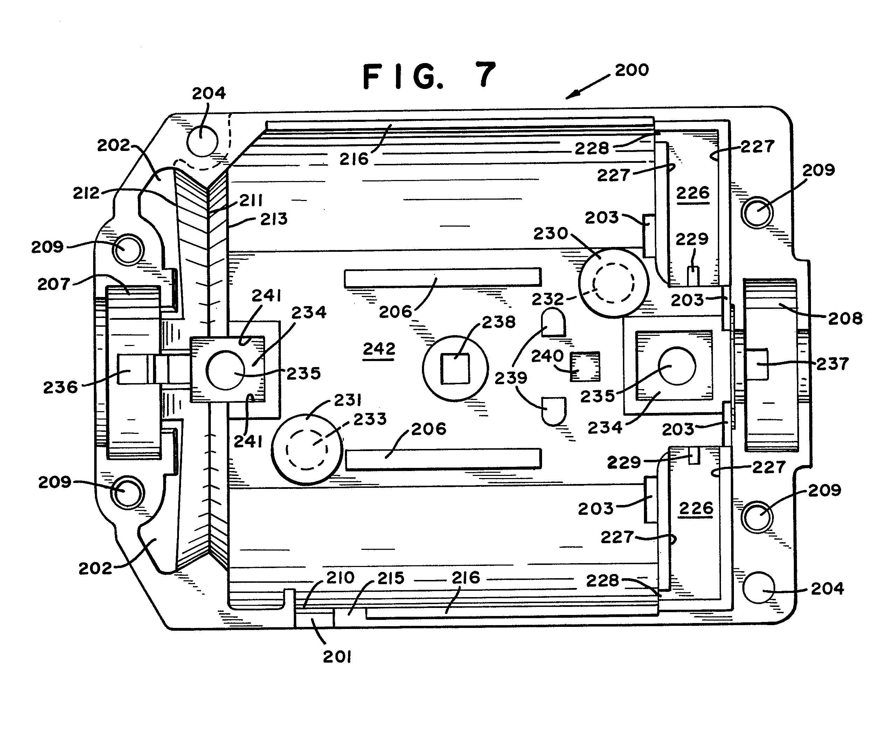

It will be most expedient to consider Figures 3, 4, 5, and 6 jointly. Figures 4 and 5 comprise end view of the cover assembly 100 as viewed from the fan end and power shaft end, respectively. Figure 6 comprises a cross section view of Figure 3 taken along the line 6-6. Centrally located in the cover 100 is a depression 105 and ribs 106. As will be seen later, the ribs 106 provide a bearing surface for the stator assembly for locating it relative to the bearings.

Left and right bearing support depressions 107 and 108 are included in the cover 100. As may most clearly be seen in Figures 4 and 5, the left and right bearing supports 107 and 108 are arcuate in shape and are configured and contoured to securely position shaft bearings in a predetermined location and orientation with respect to the ribs 106. It should be understood that the left and right bearing supports 107 and 108 could be configured with other shapes than arcuate. The matter of overriding importance is that the configuration of the ribs 106 and that of the bearing supports 107 and 108 are such as to provide a predetermined location for a stator assembly and bearing for a rotor shaft such that the rotor can rotate freely without interference from the stator. Those familiar with assemblies of this nature will recognize that the required relationships can be provided with bearings which do not have an outer circular configuration and/or with bearing supports which are other than arcuate.

The screws 302 of Figures 1 and 2 pass through holes 109 formed as an integral part of the cover 100. A tongue 110 cooperates with the assembly base 200 to provide a strain relief for the wires 301.

As may be most readily visualized by examination of Figures 1, 3, 4, and 6, the orifice 102 and 202, through which cooling air is expelled, has a generally circular configuration which slopes away from a midpoint 111 such that the outer and inner limits 112 and 113, respectively, are more remote from the fan blade and/or rotor shaft 303. The surface bounded by the inner limit 113 and the midpoint 111 comprises the frustum of a right circular cone, and in like manner, the surface between the midpoint 111 and the outer limit 112 also forms the frustum of a right circular cone. It has been determined that the flow of cooling air will be maximized when the angle of the frustum of a cone between the

BAD ORIGINAL

midpoint 111 and the inner limit 113 is of the order of 45 degrees and the frustum of the cone between the midpoint 111 and the outer limit 112 is of the order of 30 degrees. These angles are indicated in Figure 3 by including the line 114 which is parallel to the rotor shaft.

As may be seen, the parting line 101 is not everywhere planar; and along the edge 115 there is a step 116. The parting line 101, edge 115, and step 116 mate with corresponding parts on the assembly portion 200.

As mentioned earlier, a brush channel is included as an integral part of the housing assembly. As will be seen, the channel proper is in the assembly portion 200 of the housing. However, the cover includes the surface 117 which closes the brush channel.

Those skilled in the art of die making and plastic molding will appreciate that appropriate drafts are provided and that other contours and configurations are included to provide the requisite strength and to assure good molding characteristics without stress, strain, or distortion and such that dimensions and tolerances can be accurately controlled. The choice of material is an important consideration, and it has been determined that a material having the characteristics required is available in products such as glass reinforced polyesters or glass reinforced phenolics.

Considering now more specifically Figure 7, there will be seen a view looking to the interior of the assembly portion 200 of the motor housing. As a matter of convenience, elements in Figure 7 which have comparable, or nearly comparable, parts in the cover portion 100 have been given identification numbers which differ only by their first digits. For example, the mounting holes 104 of Figure 3 mate with the mounting holes 204 of Figure 7. In like manner, the assembly holes 109 of Figure 3 mate with holes 209 of Figure 7. In the illustrated embodiment, the hole 109 is a body hole, while the holes 209 have a smaller diameter to faciliate assembly with self tapping screws. It will be obvious that through holes could be substituted for the tapping holes 209 and appropriate nuts and bolts used instead of the self-tapping screws 304.

The assembly portion 200 of the housing includes an orifice 202, cooling air entrance holes 203, and ribs 206. As will be seen, the ribs 206 do not have a function identical to the ribs 106. That is, the ribs 106 determine the location of a stator relative to the housing 100. The ribs 206 merely provide an initial seating for the stator. The housing also includes a left and right bearing support 207 and 208. Although these bearing supports support the bearings during the assembly stage, their precise positioning is determined by the corresponding bearing supports 107 and 108.

As seen in Figure 1, the assembly portion 200 of the housing includes a hole 201 which forms part of the strain relief for the wires 301. The tongue 110 drops in behind the hole 201 and clamps the wire against edge 210.

The orifice 202 includes a midpoint 211, an outer limit 212, and an inner limit 213 which are configured in substantially the same way as described with respect to the corresponding elements 111, 112, and 113. The edge 215 mates with the edge 115 and the surface 216 is raised with respect to the edge 115 whereas the step 116 is recessed with respect to the edge 115. Accordingly, it will be seen that the cover 100 and assembly portion 200 will meet in mating relationship.

Next, the characteristics of the assembly portion of the housing which differ from those of the cover 100 will be considered. As previously mentioned, the housing assembly includes a brush and spring channel for securing and guiding the commutator brushes. 226 comprises the base of the brush channel and it should be appreciated that the brush channel has a depth approximately equal to its width in order to accommodate a square or rectangular brush. Thus, as stated, 226 comprises the base of the brush channel and 227 comprises the sides of the brush channel and the sides 227 have a height, perpendicular to the plane of Figure 3, which is approximately equal to the width of the base 226. When the cover 100 is mated with the assembly portion 200, the surface 117 faces the base 226 to complete the brush channel closure for capturing and confining the brush and brush spring. It should be noted that the left one of the channel sides 227 includes a slot 228. As will be seen hereinafter in connection with the description of Figure 8, a contact member which is assembled with the stator will fit into the slots 228 to provide an electrical connection between the brushes in their respective channels and the stator winding.

When the housing parts 100 and 200 are assembled, the surface 117 will be opposite the base 226 thereby completing the brush enclosure. Situated on the base 226 is a stop 229 which projects upward in a direction perpendicular to the plane of Figure 7 an amount which approximates 20 percent of the thickness of the brush. The stop 229 will serve to limit the forward motion of the brush spring and prevent it from contacting the commutator. It will be apparent that for this to function, the brush will require a longitudinal slot so that it can pass over the stop 229. It will be apparent that a modified structure could be provided without the stop 229, but with a depression (not shown) situated in substantially the same position as the stop 229 so that a separate stop member could be inserted in the depression when the stopping feature is desired.

The base 200 will be seen to include bosses 230 and 231 which have a height comparable to that of the ribs 206 which, in turn, have a height comparable to the ribs 106. As indicated by the dotted lines within the bosses 230 and 231, there is a depression in the housing 200 on the outside side thereof. These depressions 232 and 233 may be formed to coact with locator pins situated on a frame to which the motor is to be mounted thereby properly locating and orienting the motor. As illustrated, one of the depressions 232 and 233 may have an oval configuration in order to allow for tolerance between the locator pins and the depressions 232 and 233. The motor could then be assembled to the frame in the manner illustrated in Figure 2 or by any other appropriate means. The assembly housing 200 also includes depressions 234 which may be configured to capture a speed nut. In the center of the depression 234 is a hole 235 through which a threaded bolt may be placed for engagement with a captured speed nut (not shown). This would provide another alternate form of mounting the motor and could be used in conjunction with the mounting depressions 232 and 233.

In many applications, it is desirable to provide grounding connections to frame and metallic portions of electrical equipment. In order to accomplish appropriate grounding, a clip to be described more fully hereinafter in connection with Figure 9, may be positioned in the assembly portion of the housing 200. The clip of Figure 9 could be configured so that a portion thereof will fit into the left hand depression 234 and be captured therein. One portion of the clip will extend into depression 236 in the left bearing support 207 and provide an electrical grounding connection to the bearing placed in the left bearing support 207 during assembly. Another portion of the grounding clip will extend to the right of the hole 235 and provide grounding connection to the stator.

As previously suggested, the stator assembly and the bearings are resiliently biased towards the cover assembly 100. The bearing placed in the left bearing support 207 will be biased towards the bearing support 107 by the grounding clip 330, if used. If the grounding clip 330 is not used, the left bearing will be biased towards the cover assembly 100 in the manner to be described with respect to the right-hand bearing. In the right-hand bearing support 208 may be seen a depression 237. A resilient member may be inserted into and captured within the depression 237 and which will project upward slightly. When the bearing is placed in the right bearing support 208 and the cover 100 secured in position, the resilient member placed in the depression 237 will bias the bearing towards the cover bearing support 108 thereby accurately positioning the bearing and the rotor which it supports. In a similar manner, a resilient bearing may be placed in depression 238 and serve to bias the stator towards the ribs 106. In addition, the grounding clip serves as an alternate biasing means for biasing the stator towards the ribs 106.

The assembly portion 200 also includes posts 239 which project upward a distance approximating twice their width. The posts 239 fit between the stator terminal board and the stator laminations and serve as locator and/or positioning posts. The assembly portion also includes a depression 240 which may serve to position and secure a thermal cut-off device, if used.

As stated, the motor housing portions 200 and 100 are designed to support and protect the stator and rotor of a fractional horsepower motor. A typical stator 310 and rotor 320 are illustrated in Figure 8. These elements are old and well known; and therefore, it is believed to be unnecessary to describe them in exhaustive details. The stator 310 may have a configuration of the type indicated in U.S. patent 4,038,573 cited hereinabove, and which discloses a terminal board. The stator 310 shows a similar terminal board 311 and inserted into terminals of the terminal board 311 are brush contacts 312 shown more clearly in Figure 10. The stator includes laminations 313 and a winding 314. The rotor is formed on a shaft 303 which is supported by bearings 321 and 322. Secured to the shaft 303 is a magnetic structure 323 and a winding 324 which is connected to the commutator segments 325. Supported on the shaft 303 and in close proximity to the bearing 321 is a fan having a plurality of blades 326. The pitch of the fan blades 326 is such as to move air from right to left as viewed in Figure 8. However, if expedient, the direction of air flow could be reversed.

Those familiar with motors of this character will recognize that the rotor assembly 320 fits inside the stator assembly 310 and this subassembly may be placed in the assembly portion 200 of the housing in such manner that the left bearing 321 will fit into the left bearing support 207 while the right bearing 322 will fit into the right bearing support 208. In like manner, the stator 310 will fit within the housing portion 200 and the laminations 313 will be on or near the ribs 206. The post 239 will fit between the terminal board 311 and the laminations 313 in the manner generally illustrated in Figure 8 to more accurately locate and position the stator 310 with respect to the assembly portion of the housing 200. The brush contacts 312 will simultaneously fit into the slots 228. Thereafter, conventional brush and spring assemblies (not shown) will fit into the brush channel formed by the base 226 and sides 227 with the spring in contact with the brush contacts 312 and the brush biased against the commutator 325. As previously suggested, the grounding clip, to be described more fully with respect to Figure 9, may be secured and captured in the depression 234 to provide a contact between the laminations 313 and the left bearing 321.

The fan and its associated blades 326 are secured to the shaft 303 in such a position that the approximate midpoint of the fan blade tips 326 is aligned with the midpoint 211 and/or 311 of the orifice 102 and/or 202. The separation between the limits of the fan blades 326 and the midpoint 211 and/or 311 is of the order of .05 inches. The fan blades 326 have a pitch angle of approximately 37 degrees with respect to a plane that includes the axis of the shaft 303 and the center of the fan blade 326. The conic configuration between the inner and outer limits 213 and 212, respectively, enhances the flow of cooling air allowing a larger volume of air to pass over the stator 310 and rotor 320 during operation of the motor.

Figure 9 illustrates the grounding clip 330 which, as described with respect to the assembly portion of the housing 200, serves to provide a grounding connection to the stator 310 and the rotor 320 through the left bearing 321. The grounding clip 330 includes a central portion 331 which is configured to fit into the depression 234. The clip 330 may include barbs 332 which will dig into the side wall 241 of the depression 234, thereby securing the grounding clip 330 to the assembly housing 200. The clip 330 includes a hole 333 through which a threaded bolt (not shown) may pass as it couples to a speed nut secured in the depression 243. It will be apparent that it would be possible to modify the grounding clip 330 and the hole 333 so that it would serve as the speed nut and eliminate the need for a separate part. The grounding clip includes a formed portion 334 which rests on the base 242 of the assembly portion of the housing 200 and serves to lift the end 335 to a level above the upper plane of the ribs 206 to assure that the end 335 of the grounding clip 330 will be in secure contact with the laminations 313 of the stator 310. The clip 330 includes another formed portion 336 which fits into the depression 236 and provides a spring so that the end 337 bears against the left bearing 321 when it is placed in the left bearing support 207 to urge it upwards towards the left bearing support 107 when the cover 100 is placed on the assembly portion 200 of the motor housing. The clip 330 also includes a hole 338 which may be used for securing a grounding wire which would be positioned to emerge from the housing through hole 201 in the same manner that wires 301 are positioned. The wire connected to the clip 330 at hole 338 would, of course, provide the grounding connection. It will be evident that under certain circumstances wherein the grounding clip also serves as the speed nut, grounding could be accomplished through the mounting bolt that is engaged with the threads of the grounding clip in the alternate structure suggested hereinabove.

Figure 10 shows the brush contact 312 in two views. The terminal contact 315 fits into the contact located in the terminal board 311 and the configuration of the contact 312 and the bend 316 positions the spring contact 317 so that it will fit into the slot 228 and be in a position to be contacted by the spring (not shown) associated with the brush.

Figure 11 illustrates the lefthand bearing 321 for the shaft 303 and which is positioned in the supports 107, 207 of the motor housing ports 100 and 200, respectively. To assist in cooling the bearing 321, the scallops 340 are provided to permit cooling air to pass through the bearing. The direction of flow of air will depend upon the pitch of the blades of fan 326. With the fan 326 designed to expel air through the orifices 102 and 202 cooling air will be drawn through the scallopes 340 from outside of the motor. It will be obvious that the size, quantity, and orientation of the scallops 340 may vary depending upon operation conditions. Also, holes through the bearing 321 could be used in place of, or in addition to, the scallops 340.

While there has been shown and described what is considered at present to be the preferred embodiment of the invention, modifications thereto will readily occur to those skilled in the related arts. For example, in another structure a jack or terminal arrangement could be provided instead of wires and a strain relief assembly. Additionally, the structure of the cover might be modified to permit brush replacement without removal of the the cover. It is believed that no further analysis or description is required and that the foregoing so fully reveals the gist of the present invention that those skilled in the applicable arts can adapt it to meet the exigencies of their specific requirements. It is not desired, therefore, that the invention be limited to the embodiments shown and described, and it is intended to cover in the appended claims all such modifications as fall within the true spirit and scope of the invention.

CLAIMS:

1.      A fractional horsepower electric motor comprising a rotor (320), a stator (310), and a housing for said rotor and stator characterized in that said housing comprises first and second parts (100,200) configured to mate with one another so as to define an assembly for housing and supporting said rotor (320) and said stator (310), said assembly having opposed end walls formed with bearing supports (107,207; 108,208) for positioning and locating respective rotor bearings (321,322) and having openings (102,202; 103) formed therein for the exit and entrance respectively of cooling air from and to the housing, one of said parts (100,200) further being formed with locators (106) for cooperation with the stator (310) to accurately position the stator (310) relative to the bearing supports (107,207; 108,208), and one of said parts (100,200) further including as an integral part thereof means (226) for retaining brushes for electrically contacting a commutator (325) of the motor.

2.      A motor as claimed in claim 1 wherein the rotor (320) includes an impeller (326) for causing a flow of cooling air through the housing characterised in that the exit opening (102,202) is generally annular and is configured by the meeting of the frustum of two conical surfaces directed oppositely to one another and with the apex angle of the conical surface associated with the inner frustum greater than the apex angle of the cone associated with the outward frustum.

3. A motor as claimed in claim 2 <u>characterized in that</u> the apex angle of the inner conical surface is 90 degrees or thereabouts, and the apex angle of the outer conical surface is 60 degrees or thereabouts.

4. A motor as claimed in any preceding claim <u>characterized in that</u> one of said first and second housing parts (100,200) includes one or more mountings (236, 237, 238) for a resilient member for biassing the rotor (320) and/or the stator (310) into contact with locator members (106) in the other of said housing parts.

5. A motor as claimed in claim 4 <u>characterized in that</u> a first mounting (238) for a resilient member is provided for biassing the stator (310) into contact with locating ribs (106) provided in the first housing part (100), and second and third mountings (236,237) for resilient members are provided for biassing the rotor bearings (321,322) into the respective bearing supports (107,108).

6. A motor as claimed in claim 5 <u>characterized in that</u> the resilient member biassing one of the rotor bearings (321) comprises a resilient portion of a grounding clip (330) providing a grounding connection to the stator (310) and to the rotor (320) through one of the bearings (321) of the motor.

7. A motor as claimed in any of claims 1 to 5 <u>characterized in that</u> one of said housing parts (100, 200) provides a mounting for a member (330) providing a grounding connection between the stator (310) and one of the rotor bearings (321).

8.      A motor as claimed in any of the preceding claims characterized in that said housing parts (100, 200) include components (110, 210) which provide strain relief for wires when the housing parts (100,200) are assembled together.

9.      A motor as claimed in any of the preceding claims characterized in that said means (226) for retaining brushes for electrically contacting a commutator (325) of the motor comprises recesses defined between said housing parts (100,200) for locating and retaining the brushes and associated brush springs, and said recesses (226) each have an access slot (228) within which there is received a contact member (312) providing electrical connection between the stator (310) and the brush springs.

10.     A motor as claimed in any of the preceding claims characterized in that first and second external recesses are provided in said housing, located in a predetermined position with respect to said bearing supports, for locating and positioning the motor housing.

FIG. 1

FIG. 2

FIG. 3

0068729

FIG. 4

FIG. 5

FIG. 9

FIG. 10

FIG. 11

# FIG. 6

# FIG. 8A

# FIG. 8B

4/5

0068729

FIG. 7

0068729

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-1 389 519 (BOSCH)<br>* page 2, right-hand column, line 120 to page 3, left-hand column, line 25; page 3, left-hand column, line 25 to right-hand column, line 78 * | 1 | H 02 K 5/08 |
| | --- | | |
| Y | US-A-2 752 514 (SCHWENDEN)<br>* column 2, line 68 to column 3, line 1 * | 1 | |
| | --- | | |
| A | FR-A-2 386 924 (DUCELLIER)<br>* page 2, line 35 to page 3, line 24 * | 1 | |
| | --- | | |
| A | US-A-2 456 934 (FEIERTAG)<br>* column 2, lines 25 to 42 * | 4,5 | |
| | --- | | TECHNICAL FIELDS SEARCHED (Int. Cl. ³) |
| A. | DE-A-2 939 560 (LATUSSEK)<br>* page 7, line 31 to page 8, line 9 * | 5 | H 02 K |
| | --- | | |
| A | DE-A-2 847 979 (BUREK)<br>* page 9, abstract * | 5 | |
| | --- | | |
| A | GB-A-2 028 599 (VIDWANS)<br>* page 2, right-hand column, lines 113 to 124 * | 6,7 | |
| | --- | | |
| A,D | US-A-4 038 573 (HILLYER et al.)<br>* column 3, lines 14 to 57 * | 9 | |
| | --- | | |
| | -/- | | |

The present search report has been drawn up for all claims

| Place of search | Date of completion of the search | Examiner |
|---|---|---|
| THE HAGUE | 08-09-1982 | TANGOCCI A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-2 030 009 (FERODO) | | |
| A,D | US-A-3 924 147 (TARNOW et al.) | | |
| A,D | US-A-3 784 856 (PRESTON) | | |
| A,D | US-A-4 056 749 (CARLSON et al.) | | |
| A,D | US-A-3 955 113 (HILLYER) | | |

TECHNICAL FIELDS SEARCHED (Int. Cl. 3)

The present search report has been drawn up for all claims

| Place of search | Date of completion of the search | Examiner |
|---|---|---|
| THE HAGUE | 08-09-1982 | TANGOCCI A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82